# EUROPÄISCHE PATENTANMELDUNG

(11) **EP 0 545 467 A1**
(43) Veröffentlichungstag der Anmeldung: **09.06.1993**
(21) Anmeldenummer: 92203617.3
(22) Anmeldetag: 13.11.1992
(51) Int. Cl.: B05C 21/00, B60S 3/04

(54) **Vorrichtung zur Aussenkonservierung von Kraftfahrzeugen**

(30) Priorität: 30.11.1991 DE 4139590
(71) Anmelder: INDUSTRIE-LACKIERANLAGEN SCHMIDT GmbH, D-71563 Affalterbach (DE)
(72) Erfinder: Esslinger, Stefan, W-7141 Steinheim (DE); Schmidt, Wolfgang, W-7151 Affalterbach (DE); Weihermüller, Günter, W-7121 Pleidelsheim (DE)
(74) Vertreter: Dreiss, Uwe, Prof. Dr. jur. Dipl.-Ing. M.Sc.

(57) **Zusammenfassung**

Neufahrzeuge müssen mit einem Konservierungsmittel überzogen werden, wobei es sich vorzugsweise um ein leicht lösliches Wachs o.dgl. handelt. Sie schützen das Fahrzeug während des Transports oder in der Zeit zwischen Herstellung und Verkauf.

Die Scheiben, insbesondere die Frontscheibe und die Heckscheibe des Fahrzeugs müssen frei sein, damit das Fahrzeug beim Transport ohne Behinderung manövriert bzw. gefahren werden kann. Um ein Reinigen der unnötigerweise besprühten Scheiben zu vermeiden werden sie in der erfindungsgemäßen Vorrichtung während der Konservierung mittels einen Abdeckelements (7 bzw. 8) vor dem Besprühen geschützt. Jedes Abdeckelement befindet sich an einem steuerbaren, von oben absenkbaren Arm (5 bzw. 6). Das Fahrzeug steht bei einer Variante der Vorrichtung während des Besprühens still und die Vorrichtung wird entlang dem Fahrzeug zunächst in der einen Richtung und anschließend in der Gegenrichtung verfahren. Beim ersten Arbeitsgang werden bis auf einen schmalen Seitenrand alle nach oben weisenden Flächen und alle Seitenflächen besprüht. Beim Zurückfahren der Vorrichtung werden die restlichen schmalen Ränder bis hin zu den Scheiben besprüht. Gemäß einer zweiten Variante der Erfindung bewegt sich das Fahrzeug durch die Vorrichtung und die Arme mit den Abdeckelementen (7,8) werden insbesondere synchron mitbewegt.

## Beschreibung

Die Erfindung bezieht sich auf eine Vorrichtung zum Überziehen eines Kraftfahrzeugs mittels einer entfernbaren Schicht aus einem Außenkonservierungsmittel, insbesondere aus Wachs, wobei das Konservierungsmittel mittels Düsen aufgesprüht und zumindest ein Teil der Fenster während des Sprühens wenigstens teilweise abgedeckt wird. Neue Kraftfahrzeuge werden vor dem Versand, insbesondere vor dem Verschiffen, zum Zwecke der Konservierung vollständig mit einem abwaschbaren Wachs überzogen. Weil jedoch auch beim Versand kurze Strecken gefahren werden müssen, ist es notwendig, daß der Fahrer zumindest nach vorne und hinten freie Sicht hat. Infolgedessen mußte man die Kraftfahrzeuge nach dem Überziehen mit dem Konservierungsmittel an den Scheiben bzw. mindestens an der Front- und Heckscheibe vom Wachs wieder befreien. Dies ist ein relativ aufwendiger Arbeitsgang. Das Konservieren erfolgt bei der bekannten Vorrichtung im Durchlaufverfahren, wobei in der Regel die gesamte obere und seitliche Oberfläche des Fahrzeugs besprüht wird.

Um das Reinigen der Front- und Heckscheibe zu vermeiden wurde vorgeschlagen, diese beiden Scheiben manuell mit einer Pappe abzudecken. Dies ist ein verhältnismäßig aufwendiger Arbeitsgang und führt auch zu relativ viel Müll. Ein Abdecken der Seitenscheiben ist bei diesem Verfahren völlig unwirtschaftlich.

Es liegt nun die Aufgabe vor eine Vorrichtung der eingangs genannten Art so weiterzubilden, daß mit verhältnismäßig geringem Aufwand und auf wirtschaftliche Art und Weise die Fahrzeuge konserviert werden können, wobei wenigstens die Front- und Heckscheibe zumindest größtenteils auf einfache und rasche Weise vor einer Beschichtung geschützt sein sollen.

Zur Lösung dieser Aufgabe wird erfindungsgemäß vorgeschlagen, daß die Vorrichtung der eingangs beschrieben Art gemäß dem kennzeichnenden Teil des Anspruchs 1 ausgebildet ist. Durch die "Zweiteilung" der Vorrichtung in eine linke und rechte "Hälfte" ergibt sich ein Spaltraum, durch welchen die beiden Arme mit den Abdeckelementen für die Frontscheibe und die Heckscheibe hindurchgreifen können. Sobald das Fahrzeug gegenüber diesen Armen die korrekte Position eingenommen hat, werden die Arme nach unten bewegt und dadurch die Abdeckelemente an die Frontscheibe bzw. die Heckscheibe angelegt. Nunmehr kann man das Fahrzeug besprühen ohne daß diese beiden für das Fahren des Fahrzeugs wichtigen Scheiben besprüht werden. Nach Beendigung des Sprühvorgangs werden die Abdeckelemente durch Hochheben der Arme von den Scheiben entfernt und der Fahrer hat sofort freien Durchblick zumindest nach vorne und hinten. Es ist aber ohne weiteres möglich das Besprühen so durchzuführen, daß auch die Seitenscheiben zumindest weitgehend freigehalten werden.

Wenn das Fahrzeug während des Besprühens in Vorrichtung steht, so ist die Steuerung der zustellbaren Arme verhältnismäßig einfach. Wenn aber umgekehrt das Fahrzeug durch die Vorrichtung fährt oder transportiert wird, so müssen die Abdeckelemente entsprechend mitbewegt werden. Dies macht eine oder zwei zusätzliche Achsen der Arme bzw. Roboterarme notwendig. Theoretisch ist auch ein Verfahren der Vorrichtung gegenüber dem Fahrzeug möglich, wobei eine Relativgeschwindigkeit zwischen beiden vorhanden ist. Auch in diesem Falle sind dann die Ständer 1 und 2 gegenüber einem Gestell der Vorrichtung oder auch gegenüber einem Gebäude, in welchem sich die Vorrichtung befindet, verfahrbar.

Wie bereits angedeutet befindet sich jedes Abdeckelement an einem zustellbaren Arm, wobei es sich bevorzugterweise um einen sog. Roboterarm bekannter Bauart handelt. Vor dem Einfahren oder Durchfahren des Fahrzeugs befinden sich beide Arme in einer angehobenen Position und sie werden erst dann abgesenkt, wenn das Fahrzeug die korrekte Zuordnung zu den Abdeckelementen hat, so daß diese in einer einfachen Zustellbewegung an die Front- bzw. Rückscheibe angelegt werden können. Weil aber der Abstand der Front- und Heckscheibe bei jedem Fahrzeugtyp anders sein kann und auch die Neigung der Scheiben nicht bei allen Fahrzeugen identisch ist, muß man die Endlage der Roboterarme bzw. der von ihnen gehaltenen Abdeckelemente so ansteuern, daß letztere immer korrekt zu den Scheiben ausgerichtet sind bzw. daran anliegen. Man kann die Abdeckelemente so gestalten, daß sie sich an die verschiedenen Krümmungen der Scheiben anschmiegen um ein Eindringen des Konservierungsmittels zwischen Abdeckelement und Scheibe zu verhindern. Wenn in ein und derselben Vorrichtung Fahrzeuge unterschiedlicher Bauart konserviert werden sollen, so richtet sich die Größe des Abdeckelements nach der kleinsten Scheibe. Man wählt das Abdeckelement geringfügig kleiner als das kleinste Scheibenmaß, damit die Konservierung auch noch den Rahmen der kleinsten Scheibe erfassen kann. Die größeren Scheiben werden in diesem Falle prozentual gesehen etwas mehr besprüht, jedoch ist dies ohne Nachteil, weil man zum Rangieren während des Verladens nicht die gesamte Fensterfläche benötigt.

Um auch beim Abdecken der Front- und Heckscheibe einen möglichst geringen Steuerungsaufwand zu bekommen, wird in weiterer Ausgestaltung der Erfindung vorgeschlagen, daß das Abdeckelement am freien Ende seines Arms selbstausrichtend gehalten ist. In diesem Falle reicht es aus, wenn der Arm bzw. Roboterarm lediglich in einer Vertikalebene verschwenkbar oder klappbar ist. Die Vertikalebene ist selbstverständlich etwa identisch mit der Fahrzeug-Vertikalmittelebene.

Gemäß einer ersten Weiterbildung der Erfindung ist das Fahrzeug durch die Vorrichtung transportierbar, wobei die Arme mit dem Fahrzeug mitbewegbar sind. Dabei ist insbesondere vorgesehen, daß die Arme etwa mit der Vorschub- oder Fahrgeschwindigkeit des Fahrzeugs mit letzteren mitbewegbar sind.

Gemäß einer weiteren Ausgestaltung der Erfindung sind die Arme an einem gemeinsamen oder je an einem Schlitten, Wagen o.dgl. befestigt und an Laufschienen o.dgl. Führungen, insbesondere der Vorrichtung, verfahrbar. Die Laufschienen o.dgl. Führungen müssen aber nicht notwendigerweise mit einem Gestell der Vorrichtung verbunden sein, vielmehr kann man sie, wenn es die örtlichen Gegebenheiten zulassen oder notwendig machen, auch an der Decke befestigen.

Gemäß einer zweiten Variante der Erfindung wird vorgeschlagen, daß die Vorrichtung während des Sprühens in einem ersten Arbeitsgang entlang des stillstehenden Fahrzeugs von vorne nach hinten und in einem zweiten Arbeitsgang von hinten nach vorne verfahren wird oder umgekehrt, wobei im ersten Arbeitsgang alle nach oben und zur Seite weisenden Flächen bis auf einen schmalen Bereich um die Seitenscheiben und im zweiten Arbeitsgang zumindest die schmalen Restflächen oberhalb und unterhalb der Seitenscheiben besprüht werden. Das Besprühen erfolgt also hier nicht im Durchlaufverfahren, sondern in einem Taktverfahren. Hierbei wird in einem ersten Arbeitsgang nahezu die gesamte obere und seitliche Karosseriefläche mit dem Konservierungsmittel überzogen.

Es werden gewissermaßen drei Bahnen gelegt, nämlich eine obere Bahn, welche die Motorhaube, das Dach und den Kofferraumdeckel überzieht und zwei seitliche Bahnen, welche die linke und die rechte Wagenseite überziehen, also im wesentlichen die Türen und die Kotflügel. Zwischen diesen drei Bahnen befindet sich ein Bereich, welcher noch nicht konserviert ist, wobei es sich um den Bereich der Seitenscheiben und der Säulen vor und hinter den Scheiben sowie ggf. zwischen Vorder- und Hinterscheibe handelt. Falls die drei Bahnen im Vorlauf der Vorrichtung gelegt werden, besprüht man im Rücklauf der Vorrichtung mit jeweils einer schmalen Bahn den Randbereich der Seitenflächen bis zum unteren Rand der Seitenfenster und die seitlichen Dachränder bis zum oberen Rand der Seitenfenster. Diese schmalen zusätzlichen Bahnen schließen unmittelbar an die breiten, zunächst gelegten Bahnen an bzw. überlappen diese etwas.

Ein Abdecken der Seitenscheiben mittels zustellbarer Abdeckelemente ist zwar technisch möglich jedoch würde dies zu einer zu aufwendigen Vorrichtung führen. Infolgedessen ist es zweckmäßiger, wenn man in der geschilderten Weise oben und unten jeweils dicht an die Seitenscheiben herangeht, so daß diese im wesentlichen frei bleiben. Herstellerseits ist es aber nicht unerwünscht, daß man die Einfassungen der Seitenscheiben auch konserviert. Bei der geschilderten Konservierung verbleiben als freie Stellen lediglich noch die Säulen vor und hinter den Seitenscheiben und ggf. die Mittelsäulen zwischen Vorder- und Hinterscheibe. Diese müssen entweder in einem der beiden Arbeitsgänge mitkonserviert werden oder aber in einem separaten Arbeitsgang.

Diese Vorrichtung zeichnet vor allen Dingen durch einen relativ einfachen Aufbau mit wenigen Bewegungsachsen aus. Dadurch ist das Zustellen und Steuern der Sprühdüsen o.dgl. Sprühvorrichtungen mit geringem Steuerungsaufwand zu bewerkstelligen. Dies gilt selbst dann, wenn man in einem der beiden Arbeitsgänge auch noch die erwähnten Säulen mitbesprüht. In der Regel reicht eine Zustellung jeder Düse o.dgl. in Richtung einer oder maximal zweier Achsen aus, wobei dann die dritte Achsrichtung aus der Verfahrbewegung der Vorrichtung entlang des Fahrzeugs kommt. Trotz dieses geringen Steuerungsaufwands ist die Vorrichtung außerordentlich flexibel, d.h. sie kann problemlos von einer Fahrzeuggröße oder einem Fahrzeugtyp auf einen anderen umgestellt werden.

Man kann in die Steuerung den Fahrzeugtyp einprogrammieren und dann die Zustellung ggf. auch das Verfahren der Düsen o.dgl. sowie das Ein- und Ausschalten des Sprühmittelstroms entsprechend dem jeweiligen Fahrzeugtyp programmgesteuert ablaufen lassen. Auf diese Weise ist es theoretisch möglich, mit dieser Vorrichtung aufeinanderfolgend die verschiedensten Fahrzeugtypen zu konservieren. In der Praxis wird man die Vorrichtung allerdings so einsetzen, daß man eine gewisse Serie von Fahrzeugen konserviert und dann die Konservierung einer weiteren Serie vornimmt usw.

Obwohl hier taktweise gearbeitet wird erfolgt das Beschichten zumindest etwa gleich schnell wie im Durchlaufverfahren was vor allen Dingen damit zusammenhängt, daß man sowohl im Vorlauf als auch im Rücklauf der Vorrichtung das Fahrzeug besprüht. Ein wesentlicher Vorteil ist aber, daß man alle Scheiben nach dem Konservieren soweit frei hat, als es zum Fahren des Fahrzeugs während der Verladung und dgl. notwendig ist und dadurch jegliche Handarbeit entfällt. Weil das zustellbare Abdeckelement immer wieder verwendbar ist, fällt auch kein Müll, insbesondere kein Sondermüll an.

Aus dem Vorstehenden ergibt sich für den Fachmann auch ohne weiteres, daß die beim ersten Arbeitsgang verwendeten Düsen relativ breitflächig sprühen, weil sie ja große Flächen besprühen müssen während es sich beim Besprühen der Restflächen bis an die Seitenscheiben hin um spezielle Düsen wie bspw. Feinsprühdüsen in Verbindung mit Fächerdüsen handelt, die einen mehr oder weniger scharf begrenzten Strahl abgeben.

Bei durch die Vorrichtung bewegtem, also gefahrenem oder transportiertem Fahrzeug und mitbewegten Armen kann die Karosseriefläche selbstverständlich in der vorstehend geschilderten Weise besprüht werden, so daß auch bei dieser Variante die Seitenscheiben weitgehend frei bleiben.

Wenn die Vorrichtung entlang dem Fahrzeug oder relativ zu diesem verfahrbar ist und das Besprühen in der vorstehend genannten Weise vorgenommen wird, so erspart man sich eine Synchronisierung des linken und rechten Antriebs jeder Vorrrichtungshälfte, weil es beim Konservieren gar nicht auf den exakten Gleichlauf der beiden winkel- oder bogenförmigen Ständer ankommt. Auch dies trägt zur Vereinfachung der Konstruktion und zur preiswerten Herstellung bei.

Es leuchtet ein, daß die beiden Winkelschenkel nicht unbedingt gerade verlaufen und sie auch nicht notwendigerweise einen rechten Winkel miteinander einschließen müssen jedoch ist es im Hinblick auf die automatische Steuerung, insbesondere Programmsteuerung sicherlich vorteilhaft, wenn sich die etwa horizontalen Winkelschenkel entlang einer Y-Achse und die etwa vertikalen Winkelschenkel entlang einer Z-Achse erstrecken. Die Vorrichtung fährt dann in diesem Falle entlang einer X-Achse.

Um die Vorrichtung flexibel zu gestalten, insbesondere Kraftfahrzeuge unterschiedlicher Höhe besprühen zu können, ist jeder etwa horizontale Winkelschenkel in vorteilhafter Weise heb- und senkbar am etwa vertikalen Winkelschenkel gelagert.

Eine Verbesserung der Flexibilität erreicht man zweckmäßigerweise dadurch, daß alle Düsen o.dgl. längs ihrer Winkelschenkel verfahr- und einstellbar sind. Außerdem kann man ggf. auch verstellbare Düsen verwenden zumindest aber auswechselbare. Alternativ kann der Spritzstrahl durch geeignete Maßnahmen wie z.B. ändern der Materialmenge, durch Spritz-, Horn- und Lenkluft optimiert werden.

Eine weitere Variante der Erfindung ergibt sich aus Anspruch 9. Sie ermöglicht das Schrägstellen der Düsenachse in Bezug auf die Z-Achse des Koordinatensystems und damit das günstigste Ausrichten für die gewählte Verfahrrichtung der Vorrichtung und Verfahrgeschwindigkeit.

Eine andere besonders bevorzugte Ausführungsform der Erfindung beschreibt Anspruch 10. Bei dieser Ausgestaltung sind der linken und der rechten Fahrzeughälfte jeweils wenigstens zwei Hauptdüsen und zwei Zusatzdüsen zugeordnet, wobei mit den Hauptdüsen der Großteil des Fahrzeugs beschichtet wird und das Konservierungsmittel hieraus bspw. im Vorlauf der Vorrichtung austritt während dann im Rücklauf der Vorrichtung mittels der Zusatzdüsen die noch unbeschichteten Flächen, insbesondere schmalen Ränder bis zu den Seitenscheiben hin, besprüht werden. Weil die Düsen entlang ihres Winkelschenkels verfahrbar sind, kann man sie zwischen zwei Einsätzen verfahren und dadurch auf den nächsten Fahrzeugtyp einstellen. Man kann die Verfahrbarkeit aber auch anderweitig nutzen bspw. um während des Sprühens der Fahrzeugform nötigenfalls zu folgen.

Eine Weiterbildung der Erfindung sieht vor, daß in der Höhe des Fahrzeugs gemessen der Sprühbereich der Hauptdüse jedes etwa vertikalen Winkelschenkels geringer ist als die Fahrzeughöhe von deren Unterkante bis zu den Seitenfenstern. Dadurch vermeidet man, daß mit den Hauptdüsen die Seitenscheiben besprüht werden. Entsprechende, dem gleichen Gesamtziel dienende Ausgestaltungen der Vorrichtung ergeben sich aus den Ansprüchen 12 und 13.

Anspruch 14 beschreibt eine weitere bevorzugte Variante der Erfindung. Die dort erwähnte Luftdüse, die vorzugsweise mit der zugeordneten Zusatzdüse eine Verstelleinheit bildet, gewährleistet eine vergleichsweise scharfkantige Begrenzung der Beschichtung und damit das exakte Freihalten der Seitenscheibenteile, die nicht besprüht werden sollen.

Die dritte Dachsäule, also der Karosseriebereich zwischen dem hinteren Ende der hinteren Seitenscheibe und dem seitlichen Ende der Rückscheibe, ist bei vielen Fahrzeugen relativ großflächig und sie muß, insbesondere in diesem Falle, gezielt mit Wachs überzogen werden. Aus diesem Grunde kann es sehr vorteilhaft sein, wenn man die Vorrichtung gemäß Anspruch 15 ausbildet. Dabei lassen sich dann die beiden oder im Normalfalle die drei Säulen vor, hinter und zwischen den beiden Seitenscheiben durch kurze Sprühstöße sicher konservieren, ohne daß die Glasflächen völlig beschichtet werden. Es ist einleuchtend, daß man auch in diesem Falle, insbesondere bei Verwendung weiterer Düsen diese auch mit jeweils einer oder evtl. auch zwei Luftdüsen kombinieren kann damit eine relativ scharfkantige Beschichtung der zwei bzw. drei Bereiche möglich ist.

Um das Fahrzeug gegenüber allen Düsen korrekt ausrichten zu können sieht eine weitere Ausbildung der Erfindung vor, daß Fahrschienen zum Ausrichten des Fahrzeugs gegenüber den winkelförmigen Ständern vorhanden sind und man kann diese Ausbildung insofern noch dadurch ergänzen, daß man auch noch gewisse Kuhlen o.dgl. an den Fahrschienen anbringt, die zumindest die korrekte Lage einer der Fahrzeugachsen festlegen.

Ein Ausführungsbeispiel der Erfindung wird nachstehend anhand der Zeichnung näher erläutert. Die Zeichnung zeigt dieses Ausführungsbeispiel der Erfindung in schematischer Darstellung. Hierbei stellen dar:
- Figur 1: eine Vorderansicht der Vorrichtung mit einem zu beschichtenden Fahrzeug;
- Figur 2: eine Seitenansicht der Vorrichtung.

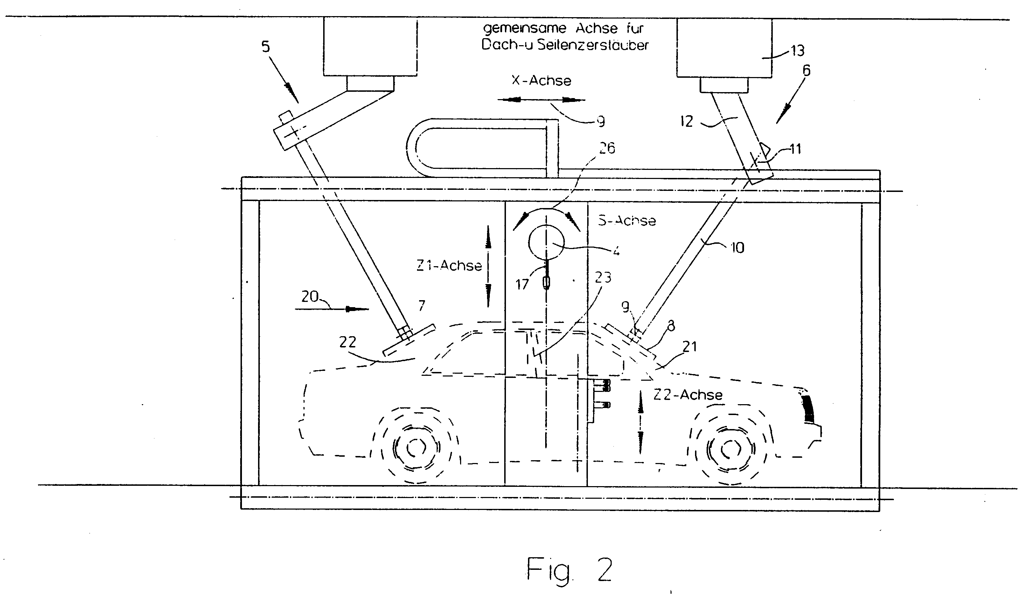

Wesentliche Elemente der erfindungsgemäßen Vorrichtung sind zwei winkelförmige Ständer 1 und 2 sowie zwei steuerbare Arme 5 und 6 mit jeweils einem Abdeckelement 7 bzw. 8. Jeder winkelförmige Ständer 1 bzw. 2 besteht aus einem etwa vertikalen Winkelschenkel 3 und einem etwa horizontalen Winkelschenkel 4. Beim Ausführungsbeispiel sind die beiden Winkelschenkel 3 und 4 jeweils gerade und sie schließen auch einen exakten Winkel von 90° miteinander ein. Infolgedessen erstrecken sich die horizontalen Winkelschenkel entlang einer Y-Achse eines Koordinatensystems während sich die vertikalen Winkelschenkel in Z-Richtung (Figur 2) des Koordinatensystems erstrecken. Die beiden winkelförmigen Ständer sind im Sinne des Doppelpfeils 9 verfahrbar (Figur 2), wobei dann diese Richtung die X-Achse des Koordinatensytems bildet.

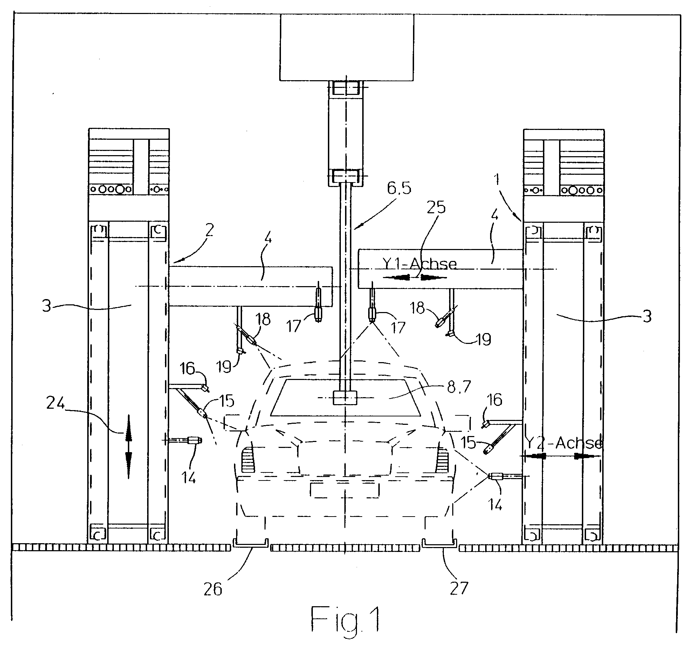

Gemäß Figur 1 ist zwischen den freien Enden der beiden horizontalen Winkelschenkel ein Zwischenraum, welcher es erlaubt, daß die Vorrichtung in Pfeilrichtung X verfahrbar ist, wenn die Abdeckelemente 7 und 8 an der Rückscheibe bzw. Vorderscheibe eines Kraftfahrzeugs anliegen. Diese Abdeckelemente befinden sich am freien Ende eines beim Ausführungsbeispiel in einer Vertikalebene verschwenkbaren und zusammenklappbaren steuerbaren Arms, wobei sie zweckmäßigerweise jeweils über ein Kardangelenk 9 oder eine ähnliche selbsteinstellende Einrichtung am freien Ende des Armteils 10 gehalten sind. Dieser ist über eine Achse 11 mit dem anderen Armteil 12 verbunden, der seinerseits schwenkbar am Antrieb 13 gelagert ist. Die Steuerung dieses Arms bzw. seiner Teile erfolgt in der bei Roboterarmen bekannten Weise, vorzugsweise programmgesteuert und dadurch abstimmbar auf die einzelnen Fahrzeugtypen bzw. -größen.

Beim Ausführungsbeispiel befindet sich an jedem vertikalen Winkelschenkel eine Hauptdüse 14 und eine Zusatzdüse 15. Letztere ist mit Höhenabstand über der Hauptdüse angebracht. Außerdem ist jeder Zusatzdüse 15 bei diesem Ausführungsbeispiel auch noch eine Luftdüse 16 zugeordnet, deren Bedeutung nachstehend noch erläutert wird. Gemäß Figur 1 ist die Luftdüse oberhalb der Zusatzdüse 15 gelegen.

In entsprechender Weise ist jeder horizontale Winkelschenkel mit einer Hauptdüse 17 und einer Zusatzdüse 18 sowie einer Luftdüse 19 versehen. Die Düsen 14,15 und 16 sind getrennt oder als Gruppe in vertikaler Richtung bzw. Z-Richtung verstellbar. Entsprechendes gilt für die Düsen 17,18 und 19 jedes horizontalen Winkelschenkels 4.

Zu Beginn des Besprühens befindet sich die Vorrichtung bspw. hinter dem Fahrzeug. Sie verfährt dann in einem ersten Arbeitsgang in Pfeilrichtung 20. Dabei tritt Konservierungsmittel aus den beiden seitlichen Hauptdüsen 14 sowie den beiden oberen Hauptdüsen 17 aus. Letztere besprühen sämtliche nach oben weisende Flächen also die Motorhaube, das Dach und den Kofferraumdeckel. Bevor mit dem Sprühen begonnen wird wurden aber die beiden Abdeckelement 7 und 8 an die Rückscheibe bzw. Frontscheibe des zu konservierenden Fahrzeugs dicht angelegt. Aus Figur 1 ersieht man, daß das Abdeckelement 8 die Frontscheibe des Kraftfahrzeugs nicht vollständig überdeckt. Dies ist durchaus erwünscht um auch den Rahmen bzw. die Umfassung der Scheibe vollständig beschichten zu können. Für das Rangieren des Fahrzeugs und insbesondere auch für das Herausfahren aus der Vorrichtung reicht die Größe der Abdeckung durch die Abdeckelemente 7 und 8 vollkommen aus.

Wie in Figur 1 mit zwei strichpunktierten Linien angedeutet, besprühen die Hauptdüsen 17 zusammen die Oberseite des Fahrzeugs. Der Sprühwinkel ist aber so festgelegt, daß die beiden Längsränder der Fahrzeug-Oberseite nicht besprüht werden. Entsprechend ist auch der Sprühwinkel der beiden seitlichen Hauptdüsen 14 festgelegt. Sie besprühen die Karosserie vom unteren Rand bis nahe an die Seitenscheiben heran ohne allerdings den unmittelbaren Bereich unterhalb der Seitenscheiben zu besprühen.

Wenn die Vorrichtung bei der angenommenen Verfahrrichtung in Pfeilrichtung 20 vorne am Fahrzeug angekommen ist erfolgt,insbesondere automatisch, eine Umsteuerung. Sie bewegt sich nunmehr entgegen dem Pfeil 20 in die Ausgangsstellung zurück. Dabei sind dann alle Hauptdüsen 14 und 17 abgeschaltet und dafür die Zusatzdüsen 15 und 18 sowie die Luftdüsen 16 und 19 zum Sprühen freigegeben. Mit den Zusatzdüsen 15 wird nunmehr der schmale Bereich zwischen der Oberseite der bereits vorgenommenen Seitenkonservierung und dem unteren Bereich der Seitenscheiben besprüht. Auch hier gilt wie bei Front- und Heckscheibe, daß das Besprühen geringfügig in den unteren Bereich der Seitenscheiben hineingehen kann bzw. soll. Um aber eine enge Begrenzung der Besprühung sowohl des oberen als auch des unteren Bereichs der Seitenscheiben zu erzielen, wird mit Hilfe der Luftdüsen 16 bzw. 19 ein Luftvorhang gesetzt über den bzw. unter den das Sprühmittel der Zusatzdüse 15 bzw. der Zusatzdüse 18 nicht gelangen kann. Damit ist auf jeden Fall sichergestellt, daß der Großteil der Seitenscheiben vom Konservierungsmittel nicht überzogen wird.

Wenn man das Fahrzeug in der geschilderten Weise mit Konservierungsmittel bzw. Wachs besprüht so bleiben eigentlich nur noch die als Säulen 21,22 und 23 bezeichneten Bereiche der Seitenflächen ohne Wachsüberzug o.dgl.. Es ist leicht einzusehen, daß man diese Bereiche bspw. mit den Zusatzdüsen 15 und/oder 18 oder auch mit weiteren nicht gezeichneten Düsen besprühen kann. Im Hinblick auf eine möglichst einfache, wenige Achsen aufweisende Vorrichtung ist es vermutlich die vorteilhaftere Lösung, wenn man die drei Säulen in einem dritten Arbeitsgang besprüht. Der Zeitaufwand hierfür ist weit geringer, weil zum einen die Verfahrstrecke der Vorrichtung kürzer ist und zum anderen zwischen den drei Stellen jeweils im Eilgang gefahren werden kann.

Falls man die bereits vorhandenen Düsen, insbesondere die Zusatzdüsen 15 und 18 für die drei Säulen, heranzieht, so ist es zweckmäßig, wenn man diese Düsen an Haltern anbringt, die verlängerbar und/oder verfahrbar sind. Im übrigen können wie gesagt die Düsen 14,15 und 16 im Sinne des Doppelpfeils 24 getrennt oder separat verstellt werden. Entsprechendes gilt für die Düsen 17,18 und 19, deren Verfahrrichtung am horizontalen Winkelschenkel 4 im Sinne der Y-Achse bzw. des Doppelpfeils 25 erfolgt.

Aus Figur 2 der Zeichnung ergibt sich, daß der Querschnitt des horizontalen Winkelschenkels 4 wesentlich kleiner ist als derjenige des vertikalen Winkelschenkels 3 und vor allen Dingen, daß an Stelle der rechteckigen Querschnittsform des vertikalen Winkelschenkels 3 eine runde Querschnittsform des horizontalen Winkelschenkels 4 gewählt wurde. Dieser Winkelschenkel ist gemäß Figur 2 im Sinne des Doppelpfeils 26 verschwenkbar, so daß die starr ggf. aber ausfahrbar daran befindlichen Düsen 17,18,19 beim Sprühen ggf. schräg zur Z-Achse gestellt werden können.

Gemäß Figur 1 sind am Boden des die Vorrichtung aufnehmenden Raums Fahrschienen 26 und 27 der Vorrichtung angebracht, welche eine korrekte Zuordnung des Fahrzeugs in der Vorrichtung zu sämtlichen Düsen und auch zu den steuerbaren Armen gewährleisten. Auch in Vorwärtsfahrtrichtung gesehen kann man eine geeignete und bekannte Einrichtung anbringen, so daß das Fahrzeug auch in Verfahrrichtung 20 während des Konservierens eine zumindest bezüglich einer der beiden Fahrzeugachsen jeweils gleichbleibende Stellung einnimmt.

## Patentansprüche

1. Vorrichtung zum Überziehen eines Kraftfahrzeugs mittels einer entfernbaren Schicht aus einem Außenkonservierungsmittel, insbesondere aus Wachs, wobei das Konservierungsmittel mittels Düsen (14,15;7,8) aufgesprüht und zumindest ein Teil der Fenster während des Sprühens wenigstens teilweise abgedeckt wird, **gekennzeichnet durch** einen beim Sprühen links und rechts des Fahrzeugs angeordneten bogen- oder winkelförmigen Ständer (1,2), wobei jeder etwa horizontale Bogen- oder Winkelschenkel (4) etwa die halbe Fahrzeugbreite übergreift und sich zwischen den gegeneinanderweisenden freien Enden der etwa horizontalen Bogen- oder Winkelschenkel ein Durchtrittsspalt für einen vorderen und hinteren, oberhalb des Fahrzeugs angeordneten, zustellbaren Arm (5,6), insbesondere Roboterarm, befindet und jeder Arm ein Abdeckelement (7,8) für die Frontscheibe bzw. die Heckscheibe des Fahrzeugs trägt und daß sich sowohl an jedem horizontalen (4) als auch jedem vertikalen Bogen- oder Winkelschenkel (3) mindestens je eine Sprühdüse (17,18;14,15) oder Sprüheinrichtung für das Konservierungsmittel befindet.

2. Vorrichtung nach Anspruch 1, dadurch gekennzeichnet, daß das Abdeckelement (7,8) am freien Ende seines Arms (5,6) selbstausrichtend gehalten ist.

3. Vorrichtung nach Anspruch 1 oder 2, dadurch gekennzeichnet, daß das Fahrzeug durch die Vorrichtung transportierbar ist und die Arme (5,6) mit dem Fahrzeug mitbewegbar sind.

4. Vorrichtung nach Anspruch 3, dadurch gekennzeichnet, daß die Arme etwa mit der Vorschub- oder Fahrgeschwindigkeit des Fahrzeugs mit letzteren mitbewegbar sind.

5. Vorrichtung nach Anspruch 3 oder 4, dadurch gekennzeichnet, daß die Arme an einem gemeinsamen oder je an einem Schlitten, Wagen o.dgl. befestigt und an Laufschienen o.dgl. Führungen, insbesondere der Vorrichtung, verfahrbar sind.

6. Vorrichtung nach Anspruch 1 oder 2, dadurch gekennzeichnet, daß die Vorrichtung während des Sprühens in einem ersten Arbeitsgang entlang des stillstehenden Fahrzeugs von vorne nach hinten und in einem zweiten Arbeitsgang von hinten nach vorne verfahren wird oder umgekehrt, wobei im ersten Arbeitsgang alle nach oben und zur Seite weisenden Flächen bis auf einen schmalen Bereich um die Seitenscheiben und im zweiten Arbeitsgang zumindest die schmalen Restflächen oberhalb und unterhalb der Seitenscheiben besprüht werden.

7. Vorrichtung nach wenigstens einem der vorhergehenden Ansprüche, dadurch gekennzeichnet, daß jeder etwa horizontale Winkelschenkel (4) heb- und senkbar am etwa vertikalen Winkelschenkel (3) gelagert ist.

8. Vorrichtung nach wenigstens einem der vorhergehenden Ansprüche, dadurch gekennzeichnet, daß alle Düsen (14,15;17,18) o.dgl. längs ihres Winkelschenkels (3 bzw. 4) verfahr- und einstellbar sind.

9. Vorrichtung nach wenigstens einem der vorhergehenden Ansprüche, dadurch gekennzeichnet, daß jeder etwa horizontale Winkelschenkel (4) um seine Längsachse schwenkbar am etwa vertikalen Winkelschenkel (3) gelagert ist.

10. Vorrichtung nach wenigstens einem der vorhergehenden Ansprüche, dadurch gekennzeichnet, daß jeder Ständerteil (3,4) zumindest eine Hauptdüse (14,17) und dgl. und eine Zusatzdüse (15,19) o.dgl. aufweist und in der Breite des Fahrzeugs gemessen der Sprühbereich aller Hauptdüsen o.dgl. der etwa horizontalen Winkelschenkel (4) zusammen etwas geringer ist als die Breite des Fahrzeugs bzw. der einzelnen Karosserieteile wie Dach, Motorhaube und Kofferraumdeckel.

11. Vorrichtung nach Anspruch 10, dadurch gekennzeichnet, daß in der Höhe des Fahrzeugs gemessen der Sprühbereich der Hauptdüse (14) jedes etwa vertikalen Winkelschenkels (3) geringer ist als die Fahrzeughöhe von deren Unterkante bis zu den Seitenfenstern.

12. Vorrichtung nach Anspruch 10 oder 11, dadurch gekennzeichnet, daß der Sprühbereich jeder Zusatzdüse (18) o.dgl. des etwa horizontalen Winkelschenkels (4) etwa der Breite des Zwischenraums zwischen dem oberen Ende der Seitenscheiben und dem seitlichen Längsrand der oberen Beschichtung entspricht.

13. Vorrichtung nach wenigstens einem der Ansprüche 10 bis 12, dadurch gekennzeichnet, daß der Sprühbereich jeder Zusatzdüse (15) o.dgl. des etwa vertikalen Winkelschenkels (3) etwa der Breite des Zwischenraums zwischen dem unteren Ende der Seitenscheiben und dem oberen Längsrand der seitlichen Beschichtung entspricht.

14. Vorrichtung nach wenigstens einem der Ansprüche 10 bis 13, dadurch gekennzeichnet, daß jede Zusatzdüse (15,18) o.dgl. mit einer Luftdüse (16,17) o.dgl. kombiniert ist, wobei der daraus austretende Luftstrom gegen den unteren bzw. oberen Bereich der Seitenscheiben gerichtet ist und einen Abweiser für den Strom des Beschichtungsmittels bildet.

15. Vorrichtung nach wenigstens einem der vorhergehenden Ansprüche, gekennzeichnet durch einen dritten Arbeitsgang, bei welchem die Vorrichtung in gleiche Richtung wie beim ersten oder zweiten Arbeitsgang verfährt, wobei die Düse bzw. Hauptdüse (14) des etwa vertikalen Winkelschenkels (3) in einer angehobenen Position oder eine weitere Düse des etwa vertikalen Schenkels (3) die Dachstützen oder -säulen besprüht.

16. Vorrichtung nach wenigstens einem der vorhergehenden Ansprüche gekennzeichnet durch Fahrschienen (26,27) zum Ausrichten des Fahrzeugs gegenüber den winkelförmigen Ständern (1,2).
